# EUROPEAN PATENT SPECIFICATION

(11) **EP 3 947 063 B1**
(45) Date of publication and mention of the grant of the patent: **06.05.2026**
(21) Application number: 20782779.1
(22) Date of filing: 31.03.2020
(51) Int. Cl.: B60T 1/06, F16D 65/12

(54) **DISK BRAKE ASSEMBLY**
SCHEIBENBREMSENANORDNUNG
ENSEMBLE FREIN À DISQUE

(30) Priority: 01.04.2019 IN 201941013002
(43) Date of publication of application: 09.02.2022
(73) Proprietor: TVS Motor Company Limited, Chennai 600006 (IN)
(72) Inventor: RAVILLA, Prasad, Chennai 600 006 (IN); K MATHEWS, Winney, Chennai 600 006 (IN); MOHAN, Shanmugam, Chennai 600 006 (IN); VENKATA MANGA RAJU, Karnam, Chennai 600 006 (IN); RAJPUT, Bharat Aravind, Chennai 600 006 (IN)
(74) Representative: Patentanwaltskanzlei Matschnig & Forsthuber OG
(86) International application number: PCT/IN2020/050310
(87) International publication number: WO 2020/202206

(56) References cited:
- EP-A1- 2 112 398
- EP-A2- 1 696 148
- WO-A1-2017/119989
- CN-U- 204 113 975
- DE-A1- 19 641 419
- US-A1- 2005 092 561
- US-A1- 2017 299 005
- US-B2- 6 786 310
- US-B2- 7 849 980

## Description

### FIELD OF INVENTION

The present subject matter relates generally to a saddle type vehicle. More particularly but not exclusively the present subject matter relates to a disc brake assembly for said saddle type vehicle.

### BACKGROUND

For a saddle type vehicle, the increase in engine power, torque and vehicle weight increases the load on the brake system which ultimately needs to be designed for severe conditions and forces. Hence, the bigger discs are required for generating more torques which reduces the disc temperatures during braking compared to the smaller discs. An example of a saddle type vehicle with a disc brake assembly is shown in US2005092561A.

As it is a known fact that the holes or slots provided in the disc helps in providing ventilation and dissipates the heat generated after applying brakes. Along with that, these perforations also helps to remove the glazed or blunt abrasive particles collected on the surface of the brake pad. There by, always the particles and debris generated due to friction while applying brakes, the particles comes into contact with disc and gets collected by these holes or slots when they comes into contact with the brake pad and eventually the collected debris falls off and provides smooth & sustained performance of the brakes.

The holes or slots provided rubs against the entire pad without leaving any chord. But the holes or slots cannot be provided at the end of the disc due to manufacturing constraints. Practically the distance between the outer diameter of disc and starting point of the nearest hole or slot from the outer diameter of the disc should be at least equal to the thickness of the disc. Hence, the holes or slots alone cannot sweep the entire pad. The circumferential area between the periphery of disc and point from where the nearest slot or holes to the periphery of the brake disc remains untouched by the slots or holes and doesn't cover the brake pad in that area. This is due to the fact that the holes or slots are away from outer diameter by at least distance equal to thickness of the disc due to manufacturing constraints.

### BRIEF DESCRIPTION OF DRAWINGS

The detailed description of the present subject matter is described with reference to the accompanying figures. Same numbers are used throughout the drawings to reference like features and components.
Figure 1 illustrates a side view of the exemplary two-wheeled vehicle, in accordance with an embodiment of the present subject matter.
Figure 2 illustrates a front isometric view of the front wheel and the disc brake assembly of the two-wheeled vehicle in accordance with an embodiment of the present subject matter.
Figure 3 illustrates an isometric view of the brake disc of the two-wheeled vehicle in accordance with an embodiment of the present subject matter.
Figure 4 illustrates a front view of brake disc of the disc brake assembly, in accordance with an embodiment of the present subject matter.
Figure 5 illustrates an upper half sectional view of the brake disk and an enlarged view of the slots provided in the brake disc, in accordance with an embodiment of the present subject matter.
Figure 6 illustrates sectional view of the essential part of the brake disc of the disc brake assembly in accordance with an embodiment of the present subject matter.
Figure 7 illustrates an enlarged view of the essential part of the brake disc and the brake pad of the disc brake assembly in accordance with an embodiment of the present subject matter.

### DETAILED DESCRIPTION

A Brake is a device which is used to create a frictional resistance. This resistance generated using the brake device is applied to a moving machine member in order to bring the moving machine member to bring to halt. In the entire process there is conversion of kinetic energy to heat and sound. The force of friction is generated between two parts, when it comes in contact. One is moving part and another is stationary. The ability to stop or braking power depends on the surface area of the frictional surfaces and the amount of force applied. Part of the heat generated during braking gets dissipated in the surrounding atmosphere and rest of the heat remains absorbed in the braking system for a certain period.

A disc brake system is mounted on the wheel hub of the vehicle. The disc rotates along in the direction of wheel. The fluid from the master cylinder is forced into a caliper, where it presses against a piston. The piston then squeezes two brake pads against the brake disc which is attached to wheel, forcing it to slow down or stop. The brake disc is usually made up of steel and in some cases, made up of composites such as ceramic-matrix or carbon composites. The brake disc is connected to the wheel. In order to stop the rotational motion of the wheel, friction material in the form of brake pads is used. Brake pads are mounted on a device called caliper.

Disk brake work on the principle of Pascal's Law or the Principle of transmission of fluid pressure i.e. pressure exerted anywhere in a confined incompressible fluid is transmitted equally in all directions throughout the fluid such that the pressure ratio remains same.

When a brake lever is pressed by the driver, the push rod connected to lever and master cylinder piston pushes the master cylinder piston. Then the master cylinder piston slides and pushes the return spring inside the bore of master cylinder, which generates pressure in brake hosepipes.

Then from the brake hosepipe the fluid enters in to cylinder bore of caliper assembly and allows the caliper piston to get pushed. Then the caliper piston pushes brake pad. This movement causes brake pads to rub with brake disc which creates friction and stops the brake disc/rotor to rotate. This way disc brake system stops or slows down the vehicle.

During the entire process of braking when frictional force is at work, brake pads goes through wear and tear and the surface of the brake pad keeps on eroding. It also causes debris to form which is essential to remove from the brake pads for efficient working.

In order to remove the debris generated during friction of brake pads the brake discs are generally provided with holes and slots. These holes and slots collect the debris and due to centrifugal force it falls out of the hole. The purpose of providing holes is just not limited to provide a mechanism to collect and remove the debris generated from the brake pad but also to reduce the heat generated due to friction during the process of braking. The holes provided in the disc rub against the entire brake pad to remove the debris from the brake pad. But due to manufacturing constraints holes or slots cannot be provided near the periphery of the disc. The circumferential area of the disc between the outer diameter of the disc and the nearest slot or holes, with respect to the periphery of the disc, doesn't sweep the glazed surface of pad. This is due to the fact that the holes or slots are spaced farther from the outer diameter by at least distance equal to thickness of the brake disc due to manufacturing constraints. Hence, the petal notch as per a known art provides a solution to scrape off the debris from the remaining part of the brake pad. But even after providing petal notches, some of the area on the brake pad remains untouched by the petals and the holes or slots provided on the brake disc as the position of the slots and notches fails to cover each point of the surface area of the brake pad. Due to devoid of any contact with the petals and holes/slots concentric band are formed on the brake pad and debris generated during braking process does not gets collected by the petals and slots. Thus, there is a need of an improved dis brake assembly overcoming all of the above problems & other problems known in the art. Hence, an object of the present subject matter is to provide a disc brake assembly in a vehicle providing plurality of oval slots inclined at a predetermined angle **(α, β, γ**) and located at a predetermined position on the brake disc. According to the present subject matter, disc brake assembly provides petal notches at the periphery of the brake disc. According to the invention a saddle type vehicle is provided disclosing the features of claim 1. Further embodiments of the invention are outlined in the dependent claims 2-10.

Referring to one embodiment, the present subject matter also provides plurality of oval slots with their major axes aligned along separate line and inclined at same angle. Due to this alignment of plurality of oval slots along separate axis line and inclined at same angle prevent disc scoring.

In an another embodiment, the angle made by the diameter, passing through center of the plurality of the oval slots, of the brake disc with the major axis of the oval slot is predetermined for each of the plurality of oval slots.

In an another embodiment, the plurality of oval slots provided on the brake disc at predetermined angle and predetermined position, the oval slots are located in such a manner that each of the oval slot sweeps the area of the brake pad and the remaining area is covered by the plurality of the petal notches.

In an embodiment, plurality of oval slots are positioned in such a way that a circle drawn at any distance from center **(P)** of the brake disc; passes through at least one oval slot which allows every point of the brake pad to be swept against oval slots and area beyond the coverage of oval slots is covered by the plurality of petal notches present on the periphery of the brake disc.

In yet another embodiment, plurality of oval slots are provided at regular interval throughout the brake disc. Plurality of major axes of the plurality of oval slots intersects each other at predetermined angle.

In another embodiment, the brake disc is provided with plurality of petal notches at the periphery of the disk. The petal notches remove the debris from the brake pad where the oval slots are not accessible, that is the area between the periphery of the disc and the starting point of the nearest oval slot to the periphery of the disc. The petal notches are cut out at predetermined angle.

In another embodiment, the pluralities of oval slots are easy to manufacture and the shear area or shear load for punching is less and also less tonnage requirement of the machine for punching.

In an embodiment, the depth of the depression created by each of the plurality of petal notch is in the range of the thickness of the brake disc. The pluralities of oval slots are provided on brake disc at regular interval.

In yet another embodiment, the present subject matter reduces the area of fluctuation while brake pad comes in contact with the brake disc and hence reduced the noise created during braking process.

In another embodiment, depth of the petal notches reduces the brake pad related wear and tear.

The aforesaid and other advantages of the present subject matter would be described in greater detail in conjunction with an embodiment of a two wheeled saddle type vehicle with the figures in the following description.

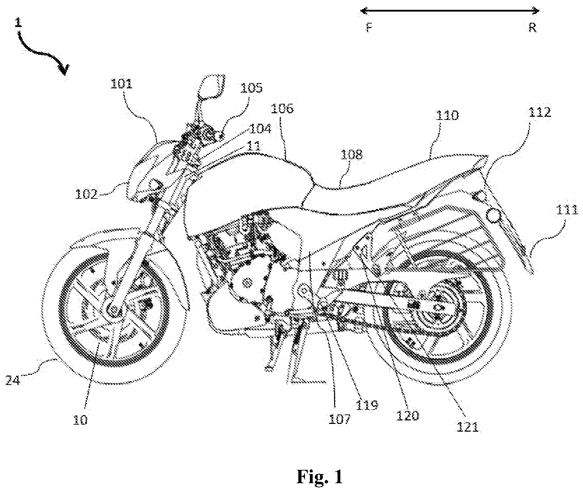

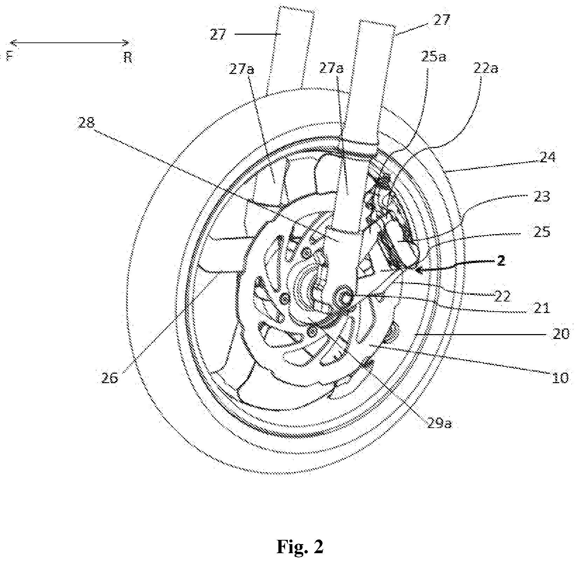

**Fig.1** shows the side view of the exemplary two-wheeled vehicle **(1)** fitted with the proposed disc **(10).** The said two-wheeled vehicle **(1)** is provided with head light assembly **(102)** and immediately above the head light assembly **(102)** is a visor **(101)** provided to protect the instrument cluster **(104)** from external factors like wind, water, dust. The instrument cluster **(104)** displays several parameters of the two-wheeled vehicle **(1)** for example fuel level, state of charge of the battery, speed of the vehicle and several other parameters. The instrument cluster **(104)** is securely placed between the handle bar **(105)** and the visor **(101)** immediately behind the head light assembly **(102).** The handle bar **(105)** is fixedly attached to the head tube **(11)** and the suspension front fork assembly (not shown) is mounted on the wheel hub **(29a)** (shown in Fig 2) of the wheel **(24).** Side cowl **(107)** protects the delicate components like PCB and other wire harness and circuits which may get damaged due to mud splashes or other factors like dirt and direct contact with moisture and air. Along with protection purpose, side cowl **(107)** is also meant for aesthetics. Immediately above the side cowl **(107)** and between rider seat **(108)** and handle bar **(105)** a fuel tank **(106)** is located. Behind the rider seat **(108),** a pillion rider seat **(110)** is provided. To provide protection from shock during driving, rear shock absorber (not shown) is fixed below the fuel tank **(106)** and mounted on swing arm (not shown). The rear shock absorber comprises a coil over spring which is wrapped over and above the cylinder. The spring coil wrapped around the cylinder of the rear shock absorber which moves upwards and gets compressed while any kind of shock due to bumpy ride is encountered and the shock energy gets transferred to the spring. Tail lamp assembly **(112)** is provided behind the pillion rider seat **(110)** and immediately below the tail lamp assembly **(112)** a mud guard assembly **(111)** is provided which protects the pillion rider and the tail lamp assembly **(112)** from the mud splashes during driving the two-wheeled vehicle **(1)** on the roads with water and mud. The two-wheeled motor cycle **(1)** is also provided with foot rest **(120)** and a foot peg **(121)** for the pillion rider to keep the foot in order to sit comfortably and avoiding hanging of the foot freely in the air. For the rider as well a foot peg **(119)** is provided which is fixedly attached with an ankle guard (not visible in the figure) to prevent the rider's foot to slip and to provide stability to the foot while driving.

**Fig.2** shows the front isometric view of the front wheel and the disc brake assembly **(2)** of the two-wheeled vehicle **(1).** A pair of left and right front forks **(27)** extending forward and obliquely downward are provided on the front part of the two-wheeled vehicle **(1).** The front forks **(27)** works as steering transmission device and suspension devices. Immediately below the front forks is an axle holder **(28).** An axle shaft **(21)** is fitted in the axle holder **(28)** which enables the wheel **(24)** fitted to the axle shaft **(21)** to rotate together with the axle shaft **(21).** In the front wheel suspension, the front fork is of inverted type. The inverted type front fork comprises an outer tube as an upper tube and an inner tube **(27a)** located below the outer tube. The inner tube **(27a)** is fitted to the axle holder **(28).** The axle holder **(28)** comprises a disc brake assembly **(2)** where brake disc **(10)** is pressed on both sides during braking process, provided on the wheel through a caliper **(23).**

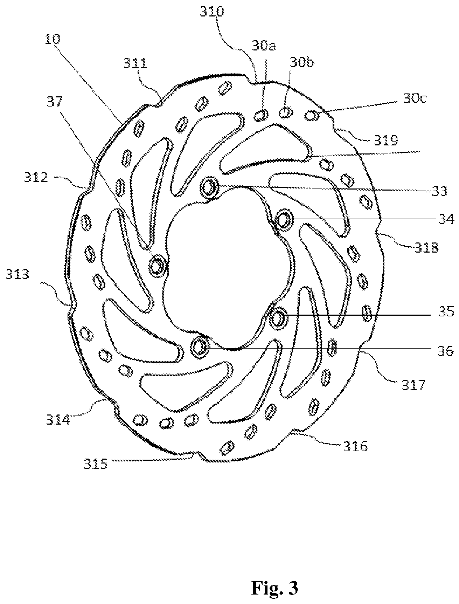

Disc brake assembly **(2)** is mounted on the mounting surfaces **(22,22a)** which are formed at the ends of the lower arm portion **(25)** and upper arm portion **(25a),** respectively. The mounting surfaces **(22,22a)** are parallel to each other and oriented towards the rear of the vehicle body obliquely upwards when mounted on the vehicle body. The brake disc **(10)** is mounted on the outer surface of the wheel hub **(29a)** using fasteners at locations **(33, 34, 35, 36, 37)** (refer fig.3).the wheel hub **(29a)** is disposed at the central portion of the rim **(20)** on the wheel **(24).Caliper (23)** is mounted on the front fork **(27)** which applies the brake torque on the brake disc **(10)** using brake pads **(50).** The brake pad **(50)** and brake disc **(10)** interface area is connected to mounting area using multiple ribs which reduces the distortion of the disc during braking. The friction member on the brake pad **(50)** gets pressed against the brake disc **(10)** to stop the rotational motion.

**Fig.3** isometric view of the disc plate provided with plurality of oval slots **(30a, 30b, 30c)** inclined at a predetermined angle and located at predetermined position on the brake disc **(10).** Pluralities of petal notches **(310 to 319)** are provided at predetermined locations such that the depth of the pluralities of petal notches **(310 to 319)** is equal to thickness of the brake disc **(10)** starting from the periphery of the brake disc **(10)** till the point from where the nearest (from the periphery of the brake disc) of the pluralities of oval slots **(30a, 30b, 30c)** starts. The distance from the outer periphery of brake disc **(10)** till the starting point of the nearest hole or oval slot from the outer periphery of the disc should be at least equal to the thickness of the brake disc **(10)** which is equal to the depression created by the pluralities of the petal notches **(310 to 319).** Petal notches **(310 to 319)** are provided on the periphery of the brake disc **(10)** at predetermined angle in order to remove the debris from the brake pad **(50)** which is not accessible by the pluralities of oval slots **(30a, 30b and 30c).**

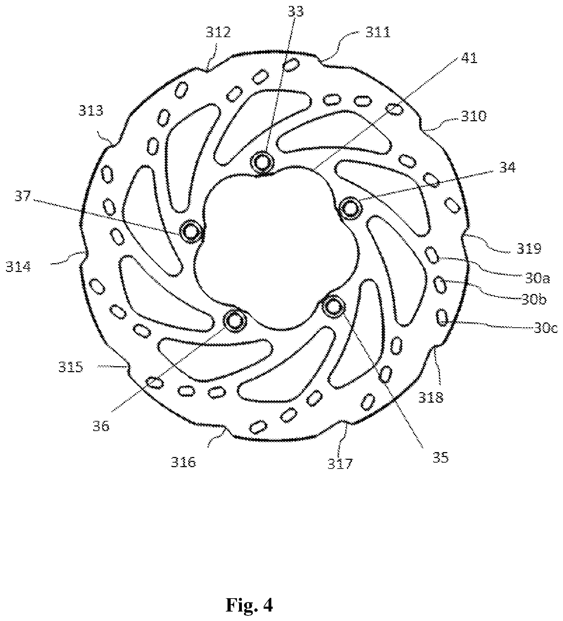

**Fig. 4** provides a brake disc **(10)** of the disc brake assembly **(2)** where the brake disc **(10)** is mounted on the wheel hub **(29a)** by means of fasteners at mounting locations **(33, 34, 35, 36 and 37).** The inner periphery **(41)** of the brake disc **(10)** allows better expansion in the lateral direction and also reduces the stress. Brake disc (10) is provided with pluralities of oval slots **(30a, 30b and 30c)** which are inclined at predetermined angle and located at predetermined position. The oval slots are provided at regular interval on the brake disc **(10).**

When the brake pad **(50)** gets pressed on the brake disc **(10)** then due to friction the surface of the brake pad **(50)** gets eroded and debris due to the friction gets accumulated on the brake pad **(50)** and it is important to remove the debris from the brake pad **(50)** for efficient working of the brakes. The plurality of oval slots **(30a, 30b and 30c)** provided on the brake disc **(10)** collects the debris from the brake pad and during the rotational motion of the brake disc **(10)** along with wheel **(24),** due to centripetal force, the debris falls out of the plurality of the oval slots **(30a, 30b and 30c)** provided on the brake disc **(10).** In addition to the plurality of oval slots **(30a, 30b and 30c)** the brake disk **(10)** is also provided with plurality of petal notches (310 to 319) at the periphery of the brake disc **(10)** at regular interval.

The plurality of petal notches **(310 to 319)** are provided in such a manner that the remaining debris, which are not collected by the plurality of oval slots **(30a, 30b and 30c),** are collected from the brake pad **(50)** by the plurality of petal notches **(310 to 319).**

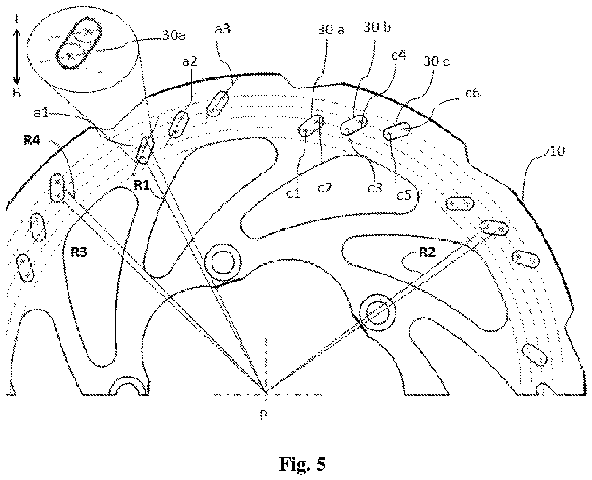

**Fig.5** shows half upper half portion of the brake disc **(10)** with a center **P.** The brake disc **(10) is** provided with plurality of oval slots **(30a, 30ba and 30c).** The plurality of oval slots **(30a, 30ba and 30c)** are inclined at predetermined angle and located at predetermined location throughout the brake disc **(10).**

Each of the plurality of oval slots **(30a, 30b and 30c)** comprises two imaginary circles each (shown in zoomed-in sub figure). Each of these pluralities of imaginary circles has a center. Plurality of imaginary circles having centers **(c1**, **c2, c3, c4, c5 and c6).** Center **(c1 and c2)** are centers of imaginary circles of the first oval slot **(30a)**, center **(c3 and c4)** are centers of imaginary circles of the second oval slot **(30b)**, center **(c5 and c6)** are centers of imaginary circles of the second oval slot **(30c)**. Each of the plurality of the centers **(c1, c2, c3, c4, c5, and c6)** passes through radius **(R1, R2, R3, R4)** drawn from center **(P)** of the brake disc **(10).** Center **c1** passes through radius **R1**, center **c2** and **c3** passes through radius **R2,** center **c4** and **c5** passes though radius **R3** and center **c6** passes through radius **R4.** When the brake is applied, the brake pad **(50)** comes in contact with plurality of oval slots **(30a, 30b and 30c)** and the debris gets collected by the plurality of oval slots **(30a, 30b and 30c).** The part of brake pad **(50)** which is left untouched by plurality of oval slots **(30a, 30b and 30c)** is covered by plurality of petal notches **(310 to 319)** which are present at the periphery of the brake disc **(10).** Pluralities of the major axes **(a1**, **a2 and a3)** are inclined at predetermined angle.

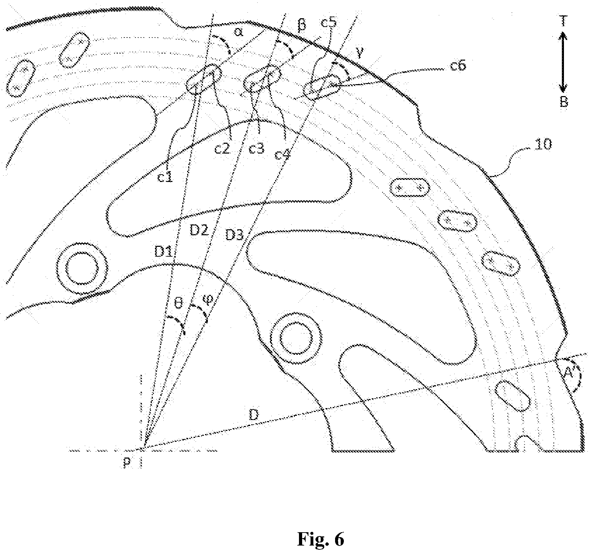

**Fig. 6** illustrates cut out part of the brake disc **(10).** The angle formed by each of the plurality of major axes **(a1, a2 and a3)** of plurality of oval slots **(30a, 30b and 30c)** with the plurality of diameter **(D1, D2 and D3),** respectively, of the brake disc **(10)** is predetermined. Angle formed between first major axis **(a1)** of the first oval slot **(30a)** with diameter **(D1)** is **α**, angle formed between second major axis **(a2)** of the second oval slot **(30b)** with diameter **(D2)** is **β,** angle formed between third major axis **(a3)** of the third oval slot **(30c)** with diameter of the brake disc **(D3)** is **γ**. Angles **α**, **β** and **γ** are substantially equal to each other, i.e., in one embodiment, **α= β** = **γ**, and are substantially provided in the range from 55 degrees to 65 degrees.

The angles **α**, **β** and **γ** are inclined in such a way that the angle value of **α**, **β** and **γ** helps in reducing the percentage of Perimeter ratio [actual perimeter/ **(π** x D)], where **'D'** is the diameter of the brake disc **(10). D1** passes through center of the first oval slot **(30a)**, **D2** passes through center of the second oval slot **(30b)** and **D3** passes through center of the third oval slot **(30c)**. Plurality of major axes **(a1**, **a2 and a3)** of each of the plurality of oval slots **(30a, 30b and 30c)** intersects each other at a certain predetermined angle. The pluralities of oval slots **(30a, 30b and 30c)** are of predetermined size. The length of the plurality of major axes **(a1, a2 and a3)** is in the range from 1.5 to 2 times the length of the minor axes of the plurality of oval slots **(30a, 30b and 30c).**

| |
|---|
| Length of major axis of oval slot = (1.5 to 2) times the length of the minor axis of oval slot. |

| |
|---|
| Perimeter ratio = [Actual perimeter / (π x D)] |

Further, during braking process it is important that the brake pad **(50)** while getting compressed against the brake disc **(10)** comes in contact such that the area of contact between brake pad **(50)** with brake disc **(10)** should not fluctuate otherwise it leads to increase in noise. The angle made between diameter **(D1)** and diameter **(D2),** that is; **'θ'** and angle made between diameter **(D2)** and diameter **(D3)** is **'ϕ'** and said angle **'0'** and **'ϕ'** helps in reducing the area of fluctuation which reduces the noise created during braking process. The depth of depression created by plurality of petal notches **(310 to 390)** is in the range of thickness of the brake disc **(10).** The angle made between the diameter **(D)** of the brake disc **(10)** and any one of plurality of petal notches **(310 to 390)** is **(A')** and is in the range from 70 degrees to 80 degrees.

| |
|---|
| **value of ϕ and θ (in degrees):** |
| **[360/ (N x 4)] ± 4;** Where 'N' is integer |
| N= Number of times the set of oval slots present all over the brake disc |
| Range of 'N' varies from 5 to 10 |
| ϕ and θ ; varies from 8 degrees to 10 degrees |

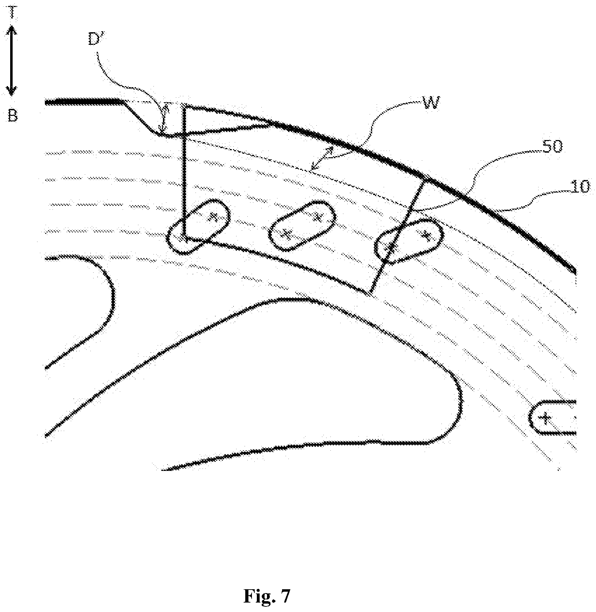

**Fig.7** illustrates the enlarged view of the essential part of the brake disc **(10).** During the process of braking, the brake pad **(50)** comes in contact with the brake disc **(10)** and plurality of slots **(30a, 30b and 30c)** present on brake disc **(10)** which removes the debris generated due to friction. Entire area of the brake pad **(50)** is covered by the plurality of oval slots **(30a, 30b and 30c)** and the remaining area having width **'W'** which is out of coverage area of plurality of oval slots **(30a, 30b and 30c)** is covered by the plurality of petal notches **(310 to 319)** which ensures that every point on the surface area of the brake pad **(50)** gets covered and clears the debris effectively. The depth of the depression **(D')** created by plurality of petal notches **(310 to 319)** is given by:

| |
|---|
| **t ≤ D' ≤ 1.25t** ; where 't' is the thickness of the brake disc **(10)** |

The depth of the depression **(D')** ensures that removal of the debris from the brake pad **(50)** is effective and also reduces the wear and tear of the brake pad **(50)** quickly. Further, the angle made between the diameter **(D)** of the brake disc **(10)** and any one of the plurality of petal notches **(310 to 390)** is in the range of 70 degrees to 80 degrees in order to cover the remaining area of the brake pad **(50)** having width **'W',** which is out of the coverage area of the plurality of oval slots **(30a, 30b and 30c).** Also, the width (W) of the area covered by the plurality of petal notches **(310 to 319)** is equal to the depth of the depression (D') created by plurality of petal notches **(310 to 319),** that is, W**=D'**

| |
|---|
| **W = D'** |

Arrows provided in the top right corner of each figure depicts direction with respect to the vehicle, wherein an arrow **F** denotes front direction, an arrow **R** indicated Rear direction, **T** denotes top and **B** denotes bottom direction as and where applicable. Improvements and modifications may be incorporated herein without deviating from the scope of the invention.

## Claims

1. A saddle type vehicle (1) comprising:
an axle holder (28);
an axle shaft (21), said axle shaft (21) fitted in said axle holder (28);
a wheel hub (29a);
a disc brake assembly (2), said disc brake assembly (2) capable of applying braking on a wheel (24);
said disc brake assembly (2) including:
a brake disc (10), said brake disc (10) being mounted on said wheel hub (29a);
a caliper (23); and
a brake pad (50), said brake pad (50) having a friction member adapted to press against an area of contact on said brake disc (10) for stopping rotational motion of said wheel (24), said brake pad (50) being mounted on said caliper (23);
wherein said area of contact on said brake disc (10) being provided with a plurality of set of oval slots (30a, 30b, 30c), wherein said friction member of said brake pad (50) being pressed on said plurality of set of oval slots (30a, 30b, 30c);
each slot (30a, 30b, 30c) of said plurality of set of oval slots (30a, 30b, 30c) having a major axes (a1, a2, a3), said major axis (a1, a2, a3) being disposed at a predetermined angle (α, β, and γ);
each slot (30a, 30b, 30c) of said plurality of set of oval slots (30a, 30b, 30c) being located at a predetermined diameter (D1, D2, and D3), wherein said predetermined diameter (D1, D2, D3) being from a rotary centre (P) of said brake disc (10); and
said brake disc (10) being provided with a plurality of petal notches (310 to 319) at an outer periphery of said brake disc (10),
**characterized in that** said plurality of set of oval slots (30a, 30b, 30c) comprising a first oval slot (30a), a second oval slot (30b) and a third oval slot (30c), each slot (30a, 30b, 30c) of said plurality of set of oval slots (30a, 30b, 30c) comprises two imaginary circles respectively, a first imaginary circle of said first oval slot (30a) has a first center (c1), a second imaginary circle of said first oval slot (30a) has a second center (c2), a first imaginary circle of said second oval slot (30b) has a third center (c3), a second imaginary circle of said second oval slot (30b) has a fourth center (c4), and a first imaginary circle of said third oval slot (30c) has a fifth center (c5), a second imaginary circle of said third oval slot (30c) has a sixth center (c6), and
wherein a distance from said first center (c1) to the rotary center (P) of said brake pad is R1, a distance from said second center (c2) and said third center (c3) to the center (P) of said brake pad are both R2, a distance from said fourth center (c4) and said fifth center (c5) to the rotary center (P) of said brake pad are both R3 and a distance from said sixth center (c6) to the center (P) of said brake pad is R4,
wherein the brake pad (50) comes in contact with said plurality of oval slots (30a, 30b and 30c) upon brake of said saddle type vehicle (1) being applied, and debris being collected by said plurality of oval slots (30a, 30b and 30c).

2. The saddle type vehicle (1) as claimed in claim 1, wherein said predetermined angle (α, β, γ) being substantially equal to each other.

3. The saddle type vehicle (1) as claimed in claim 1, wherein said predetermined angle (α, β, γ) being made by said major axes (a1, a2, a3) of each slot of said plurality of oval slots (30a, 30b, 30c) with a diameter of said plurality of predetermined diameter (D1, D2, and D3), said diameter defining position of said each slot (30a, 30b, 30c) of said brake disc (10), wherein said predetermined angle (α, β, γ) being in a range from 55 degrees to 65 degrees.

4. The saddle type vehicle (1) as claimed in claim 1, wherein a depth of depression (D') created by said plurality of petal notches (310 to 319) being in range of thickness (t) of said brake disc (10).

5. The saddle type vehicle (1) as claimed in claim 4, wherein said depth of said depression (D') created by said plurality of petal notches (310 to 319) being approximately equal to 1 to 1.25 times said thickness (t) of brake disc (10).

6. The saddle type vehicle (1) as claimed in claim 5, wherein at least a portion of said area of contact not being covered by said plurality of slots (30a, 30b, 30c), being covered by said plurality of petal notches (310 to 319), said area of contact covered by said plurality of petal notches (310 to 319) having a width (W), said width (W) being equal to the depth of the depression (D').

7. The saddle type vehicle (1) as claimed in claim 1, wherein said plurality of petal notches (310 to 319) forming an angle (A') with a diameter (D) of said brake disc (10), wherein said angle (A') being in a range of 70 degrees to 80 degrees.

8. The saddle type vehicle (1) as claimed in claim 1, wherein length of said major axes (al, a2, a3) of said each set of said plurality of oval slots (30a, 30b, and 30c) being in said range of 1.5 to 2 times said length of a minor axis of said plurality of oval slots (30a, 30b, and 30c).

9. The saddle type vehicle (1) as claimed in claim 8, wherein said length of said minor axis being equal to thickness (t) of said brake disc (10).

10. The saddle type vehicle (1) as claimed in claim 1, wherein a predetermined angle (Θ) formed between said diameter (D1) and said diameter (D2) being equal to a predetermined angle (ψ) formed between said diameter (D2) and said diameter (D3) and wherein said angle (Θ, ψ) being in range of 8 degrees to 12 degrees.

## Patentansprüche

1. Satteltyp-Fahrzeug (1), umfassend:
einen Achshalter (28);
eine Achse (21), wobei die Achse (21) in den Achshalter (28) eingesetzt ist;
eine Radnabe (29a);
eine Scheibenbremsbaugruppe (2), wobei die Scheibenbremsbaugruppe (2) in der Lage ist, ein Rad (24) zu bremsen;
wobei die Scheibenbremsbaugruppe (2) umfasst:
eine Bremsscheibe (10), wobei die Bremsscheibe (10) an der Radnabe (29a) angebracht ist;
einen Bremssattel (23); und
einen Bremsbelag (50), wobei der Bremsbelag (50) ein Reibungselement aufweist, das dazu ausgelegt ist, gegen einen Kontaktbereich auf der Bremsscheibe (10) zu drücken, um die Drehbewegung des Rades (24) zu stoppen, wobei der Bremsbelag (50) an dem Bremssattel (23) angebracht ist;
wobei der Kontaktbereich auf der Bremsscheibe (10) mit einer Vielzahl von Sätzen ovaler Schlitze (30a, 30b, 30c) versehen ist, wobei das Reibungselement des Bremsbelags (50) auf die Vielzahl von Sätzen ovaler Schlitze (30a, 30b, 30c) gedrückt wird;
wobei jeder Schlitz (30a, 30b, 30c) der mehreren Sätze ovaler Schlitze (30a, 30b, 30c) eine Hauptachse (a1, a2, a3) aufweist, wobei die Hauptachsen (a1, a2, a3) in einem vorbestimmten Winkel (α, β und γ) angeordnet sind;
wobei jeder Schlitz (30a, 30b, 30c) der mehreren Sätze ovaler Schlitze (30a, 30b, 30c) an einem vorbestimmten Durchmesser (D1, D2 und D3) angeordnet ist, wobei der vorbestimmte Durchmesser (D1, D2, D3) von einem Drehmittelpunkt (P) der Bremsscheibe (10) aus gemessen wird; und
die Bremsscheibe (10) mit mehreren blütenblattförmigen Kerben (310 bis 319) an einem Außenumfang der Bremsscheibe (10) versehen ist,
**dadurch gekennzeichnet, dass** die mehreren Sätze ovaler Schlitze (30a, 30b, 30c), die einen ersten ovalen Schlitz (30a), einen zweiten ovalen Schlitz (30b) und einen dritten ovalen Schlitz (30c) umfassen, wobei jeder Schlitz (30a, 30b, 30c) der mehreren Sätze ovaler Schlitze (30a, 30b, 30c) jeweils zwei imaginäre Kreise umfasst, wobei ein erster imaginärer Kreis des ersten ovalen Schlitzes (30a) einen ersten Mittelpunkt (c1) aufweist, ein zweiter imaginärer Kreis des ersten ovalen Schlitzes (30a) einen zweiten Mittelpunkt (c2) aufweist, ein erster imaginärer Kreis des zweiten ovalen Schlitzes (30b) einen dritten Mittelpunkt (c3) aufweist, ein zweiter imaginärer Kreis des zweiten ovalen Schlitzes (30b) einen vierten Mittelpunkt (c4) aufweist und ein erster imaginärer Kreis des dritten ovalen Schlitzes (30c) einen fünften Mittelpunkt (c5) aufweist, ein zweiter imaginärer Kreis des dritten ovalen Schlitzes (30c) einen sechsten Mittelpunkt (c6) aufweist und
wobei ein Abstand vom ersten Mittelpunkt (c1) zum Drehmittelpunkt (P) des Bremsbelags beträgt R1, der Abstand vom zweiten Mittelpunkt (c2) und vom dritten Mittelpunkt (c3) zum Mittelpunkt (P) des Bremsbelags beträgt jeweils R2, der Abstand vom vierten Mittelpunkt (c4) und vom fünften Mittelpunkt (c5) zum Drehmittelpunkt (P) des Bremsbelags beträgt jeweils R3 und der Abstand vom sechsten Mittelpunkt (c6) zum Mittelpunkt (P) des Bremsbelags beträgt R4,
wobei der Bremsbelag (50) bei Betätigung der Bremse des sattelförmigen Fahrzeugs (1) mit den mehreren ovalen Schlitzen (30a, 30b und 30c) in Kontakt kommt und Schmutz durch die mehreren ovalen Schlitze (30a, 30b und 30c) aufgefangen wird.

2. Satteltyp-Fahrzeug (1) nach Anspruch 1, wobei die vorbestimmten Winkel (α, β, γ) im Wesentlichen gleich sind.

3. Satteltyp-Fahrzeug (1) nach Anspruch 1, wobei die vorbestimmten Winkel (α, β, γ) durch die Hauptachsen (a1, a2, a3) jedes Schlitzes der mehreren ovalen Schlitze (30a, 30b, 30c) mit einem Durchmesser der mehreren vorbestimmten Durchmesser (D1, D2 und D3) gebildet wird, wobei der Durchmesser die Position jedes Schlitzes (30a, 30b, 30c) der Bremsscheibe (10) definiert, wobei der vorbestimmte Winkel (α, β, γ) in einem Bereich von 55 Grad bis 65 Grad liegt.

4. Satteltyp-Fahrzeug (1) nach Anspruch 1, wobei die Tiefe der durch die mehreren Blütenblattkerben (310 bis 319) erzeugten Vertiefung (D') im Bereich der Dicke (t) der Bremsscheibe (10) liegt.

5. Satteltyp-Fahrzeug (1) nach Anspruch 4, wobei die Tiefe der durch die mehreren Blütenblattkerben (310 bis 319) erzeugten Vertiefung (D') ungefähr dem 1- bis 1,25-fachen der Dicke (t) der Bremsscheibe (10) entspricht.

6. Satteltyp-Fahrzeug (1) nach Anspruch 5, wobei mindestens ein Teil des Kontaktbereichs, der nicht von der Vielzahl von Schlitzen (30a, 30b, 30c) nicht abgedeckt ist, von der Vielzahl von Blütenblattkerben (310 bis 319) abgedeckt ist, wobei der von der Vielzahl von Blütenblattkerben (310 bis 319) abgedeckte Kontaktbereich eine Breite (W) aufweist, wobei die Breite (W) gleich der Tiefe der Vertiefung (D') ist.

7. Satteltyp-Fahrzeug (1) nach Anspruch 1, wobei die mehreren Blütenblattkerben (310 bis 319) einen Winkel (A') mit einem Durchmesser (D) der Bremsscheibe (10) bilden, wobei der Winkel (A') in einem Bereich von 70 Grad bis 80 Grad liegt.

8. Satteltyp-Fahrzeug (1) nach Anspruch 1, wobei die Länge der Hauptachsen (a1, a2, a3) jedes Satzes der mehreren ovalen Schlitze (30a, 30b und 30c) im Bereich des 1,5- bis 2-fachen der Länge einer Nebenachse der mehreren ovalen Schlitze (30a, 30b und 30c) liegt.

9. Satteltyp-Fahrzeug (1) nach Anspruch 8, wobei die Länge der Nebenachse gleich der Dicke (t) der Bremsscheibe (10) ist.

10. Satteltyp-Fahrzeug (1) nach Anspruch 1, wobei ein vorbestimmter Winkel (Θ), der zwischen dem Durchmesser (D1) und dem Durchmesser (D2) gebildet wird, gleich einem vorbestimmten Winkel (ψ) ist, der zwischen dem Durchmesser (D2) und dem Durchmesser (D3) gebildet wird, und wobei der Winkel (Θ, ψ) im Bereich von 8 Grad bis 12 Grad liegt.

## Revendications

1. Véhicule de type selle (1) comprenant :
un support d'essieu (28) ;
un arbre d'essieu (21), ledit arbre d'essieu (21) étant monté dans ledit support d'essieu (28) ;
un moyeu de roue (29a) ;
un ensemble de frein à disque (2), ledit ensemble de frein à disque (2) étant capable d'appliquer un freinage sur une roue (24) ;
ledit ensemble de frein à disque (2) comprenant :
un disque de frein (10), ledit disque de frein (10) étant monté sur ledit moyeu de roue (29a) ;
un étrier (23) ; et
une plaquette de frein (50), ladite plaquette de frein (50) comportant un élément de friction adapté pour appuyer contre une zone de contact sur ledit disque de frein (10) afin d'arrêter le mouvement de rotation de ladite roue (24), ladite plaquette de frein (50) étant montée sur ledit étrier (23) ;
dans lequel ladite zone de contact sur ledit disque de frein (10) est pourvue d'une pluralité d'ensembles de fentes ovales (30a, 30b, 30c), dans lequel ledit élément de friction de ladite plaquette de frein (50) est pressé sur ladite pluralité d'ensembles de fentes ovales (30a, 30b, 30c) ;
chaque fente (30a, 30b, 30c) de ladite pluralité d'ensembles de fentes ovales (30a, 30b, 30c) ayant un axe principal (a1, a2, a3), ledit axe principal (a1, a2, a3) étant disposé selon un angle prédéterminé (α, β et γ) ;
chaque fente (30a, 30b, 30c) de ladite pluralité d'ensembles de fentes ovales (30a, 30b, 30c) étant située à un diamètre prédéterminé (D1, D2 et D3), ledit diamètre prédéterminé (D1, D2, D3) étant mesuré à partir d'un centre de rotation (P) dudit disque de frein (10) ; et
ledit disque de frein (10) étant muni d'une pluralité d'encoches en pétales (310 à 319) à la périphérie extérieure dudit disque de frein (10),
**caractérisé en ce que** ladite pluralité d'ensembles de fentes ovales (30a, 30b, 30c) comprenant une première fente ovale (30a), une deuxième fente ovale (30b) et une troisième fente ovale (30c), chaque fente (30a, 30b, 30c) de ladite pluralité d'ensembles de fentes ovales (30a, 30b, 30c) comprenant respectivement deux cercles imaginaires, un premier cercle imaginaire de ladite première fente ovale (30a) ayant un premier centre (c1), un deuxième cercle imaginaire de ladite première fente ovale (30a) ayant un deuxième centre (c2), un premier cercle imaginaire de ladite deuxième fente ovale (30b) ayant un troisième centre (c3), un deuxième cercle imaginaire de ladite deuxième fente ovale (30b) a un quatrième centre (c4), et un premier cercle imaginaire de ladite troisième fente ovale (30c) a un cinquième centre (c5), un deuxième cercle imaginaire de ladite troisième fente ovale (30c) a un sixième centre (c6), et
dans lequel une distance dudit premier centre (c1) au centre de rotation (P) de ladite plaquette de frein est R1, une distance entre ledit deuxième centre (c2) et ledit troisième centre (c3) et le centre (P) de ladite plaquette de frein est R2, une distance entre ledit quatrième centre (c4) et ledit cinquième centre (c5) et le centre de rotation (P) de ladite plaquette de frein est R3, et une distance entre ledit sixième centre (c6) au centre (P) de ladite plaquette de frein est R4,
dans lequel la plaquette de frein (50) entre en contact avec ladite pluralité de fentes ovales (30a, 30b et 30c) lors du freinage dudit véhicule de type selle (1), et les débris sont collectés par ladite pluralité de fentes ovales (30a, 30b et 30c).

2. Véhicule de type selle (1) selon la revendication 1, dans lequel lesdits angles prédéterminés (α, β, γ) sont sensiblement égaux entre eux.

3. Véhicule de type selle (1) selon la revendication 1, dans lequel lesdits angles prédéterminés (α, β, γ) sont formés par lesdits axes principaux (a1, a2, a3) de chacune desdites multiples fentes ovales (30a, 30b, 30c) ayant un diamètre prédéterminé (D1, D2 et D3), ledit diamètre définissant la position de chacune des fentes (30a, 30b, 30c) dudit disque de frein (10), dans lequel lesdits angles prédéterminés (α, β, γ) sont compris dans une plage de 55 degrés à 65 degrés.

4. Véhicule de type selle (1) selon la revendication 1, dans lequel la profondeur de la dépression (D') créée par ladite pluralité d'encoches en pétales (310 à 319) se situe dans la plage d'épaisseur (t) dudit disque de frein (10).

5. Véhicule de type selle (1) selon la revendication 4, dans lequel ladite profondeur de ladite dépression (D') créée par ladite pluralité d'encoches en pétales (310 à 319) est approximativement égale à 1 à 1,25 fois ladite épaisseur (t) du disque de frein (10).

6. Véhicule de type selle (1) selon la revendication 5, dans lequel au moins une partie de ladite zone de contact non recouverte par ladite pluralité de fentes (30a, 30b, 30c), étant recouverte par ladite pluralité d'encoches en pétales (310 à 319), ladite zone de contact recouverte par ladite pluralité d'encoches en pétales (310 à 319) ayant une largeur (W), ladite largeur (W) étant égale à la profondeur de la dépression (D').

7. Véhicule de type selle (1) selon la revendication 1, dans lequel ladite pluralité d'encoches en pétales (310 à 319) forme un angle (A') avec un diamètre (D) dudit disque de frein (10), ledit angle (A') étant compris entre 70 degrés et 80 degrés.

8. Véhicule de type selle (1) selon la revendication 1, dans lequel la longueur desdits grands axes (a1, a2, a3) de chaque ensemble de ladite pluralité de fentes ovales (30a, 30b et 30c) est comprise dans ladite plage de 1,5 à 2 fois ladite longueur d'un petit axe de ladite pluralité de fentes ovales (30a, 30b et 30c).

9. Véhicule de type selle (1) selon la revendication 8, dans lequel ladite longueur dudit axe mineur est égale à l'épaisseur (t) dudit disque de frein (10).

10. Véhicule de type selle (1) selon la revendication 1, dans lequel un angle prédéterminé (Θ) formé entre ledit diamètre (D1) et ledit diamètre (D2) est égal à un angle prédéterminé (ψ) formé entre ledit diamètre (D2) et ledit diamètre (D3) et dans lequel ledit angle (Θ, ψ) est compris entre 8 degrés et 12 degrés.
